# FASCICULE DE BREVET EUROPEEN

(11) **EP 3 715 612 B1**
(45) Date de publication et mention de la délivrance du brevet: **22.12.2021**
(21) Numéro de dépôt: 20156013.3
(22) Date de dépôt: 07.02.2020
(51) Int. Cl.: F02K 1/72

(54) **TURBORÉACTEUR DOUBLE FLUX COMPORTANT UNE SÉRIE DE LAMES ROTATIVES POUR OBTURER LA VEINE DU FLUX SECONDAIRE**
DOPPELFLUSS-TURBOTRIEBWERK, DAS EINE REIHE VON ROTIERENDEN SCHAUFELBLÄTTERN UMFASST, UM DEN KANAL DES SEKUNDÄRSTROMS ABZUDICHTEN
DUAL-FLOW TURBOJET ENGINE COMPRISING A SERIES OF ROTARY STRIPS FOR BLOCKING THE SECONDARY FLOW STREAM

(30) Priorité: 25.03.2019 FR 1903095
(43) Date de publication de la demande: 30.09.2020
(73) Titulaire: AIRBUS OPERATIONS (S.A.S.), 31060 Toulouse (FR)
(72) Inventeur: RIDRAY, Frédéric, 31060 TOULOUSE Cedex 9 (FR); COUSIN, Antoine, 31060 TOULOUSE Cedex 9 (FR)
(74) Mandataire: Gicquel, Olivier Yves Gérard

(56) Documents cités:
- DE-A1- 1 937 679
- US-A- 2 933 890
- US-A- 4 030 290

## Description

La présente invention concerne un turboréacteur double flux qui comporte une série de lames qui sont montées rotatives pour obturer la veine du flux secondaire, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée. En outre, le déplacement de chaque porte d'inversion est réalisé à l'aide d'une bielle qui traverse la veine secondaire en position escamotée et qui obstrue donc partiellement la veine secondaire.

Bien que les portes d'inversion donnent entière satisfaction, il est souhaitable de trouver des mécanismes différents, en particulier des mécanismes moins lourds et qui ne présentent aucune obstruction du flux secondaire en position escamotée.

On connaît le document US2933890 qui décrit un système de manœuvre, arrangé dans un turboréacteur simple flux, pour obturer un passage d'air au moyen de lames rotatives.

Un objet de la présente invention est de proposer un turboréacteur double flux qui comporte une série de lames qui sont montées rotatives pour obturer la veine du flux secondaire. A cet effet, est proposé un turboréacteur double flux tel que revendiqué dans la revendication 1.

Un tel turboréacteur permet une réduction de masse en remplaçant les portes d'inversion et leurs mécanismes d'entraînement par des lames pivotantes plus légères avec un système de manœuvre simplifié.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant un turboréacteur double flux selon l'invention,
La figure 2 est une vue en perspective du turboréacteur double flux selon l'invention en position avancée et escamotée,
La figure 3 est une vue en perspective du turboréacteur double flux selon l'invention, en position reculée et déployée,
La figure 4 est une représentation schématique d'un turboréacteur double flux selon l'invention vu en coupe par un plan vertical,
La figure 5 est une vue en perspective de derrière d'un système de manœuvre selon l'invention,
La figure 6 est une vue de derrière du système de manœuvre de la Fig. 5,
La figure 7 est une vue en coupe et de côté selon la ligne VII-VII de la Fig. 6 d'un système de guidage radial selon un premier mode de réalisation de l'invention,
La figure 8 est une vue en coupe et de côté d'un système de guidage radial selon un deuxième mode de réalisation de l'invention,
La figure 9 est une vue en coupe et de côté d'un système de guidage radial selon un troisième mode de réalisation de l'invention,
La figure 10 est une vue en coupe et de côté d'un système de positionnement axial selon un premier mode de réalisation de l'invention,
La figure 11 est une vue de derrière d'un système de positionnement axial selon un deuxième mode de réalisation de l'invention,
La figure 12 est une vue en coupe et de côté selon la ligne XII-XII de la Fig. 11 du système de positionnement axial selon le deuxième mode de réalisation, et
La figure 13 est une vue en coupe et de côté d'un système de positionnement axial selon un troisième mode de réalisation.

Dans la description qui suit, les termes relatifs à une position sont pris en référence au sens d'écoulement de l'air dans un turboréacteur qui s'écoule donc de l'avant vers l'arrière de l'aéronef.

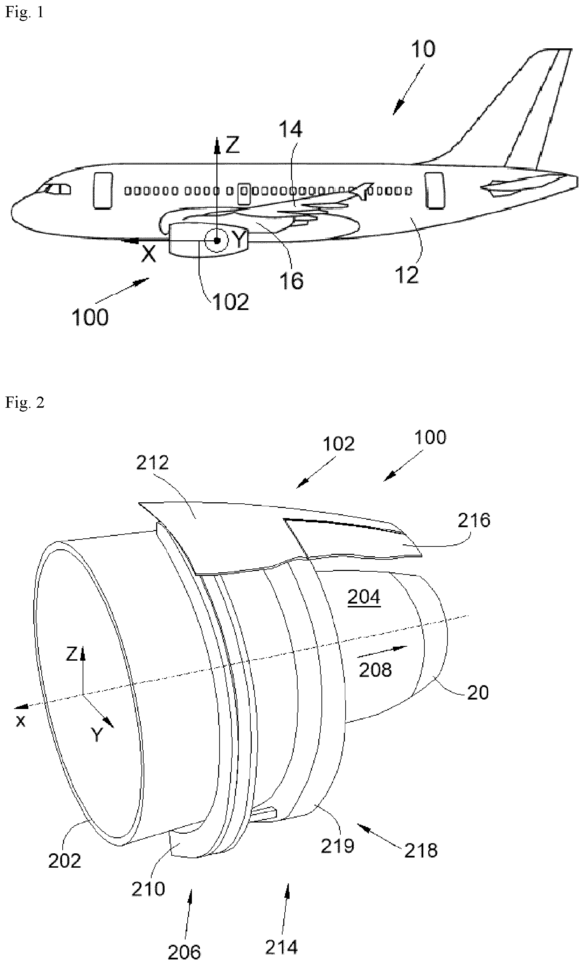

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

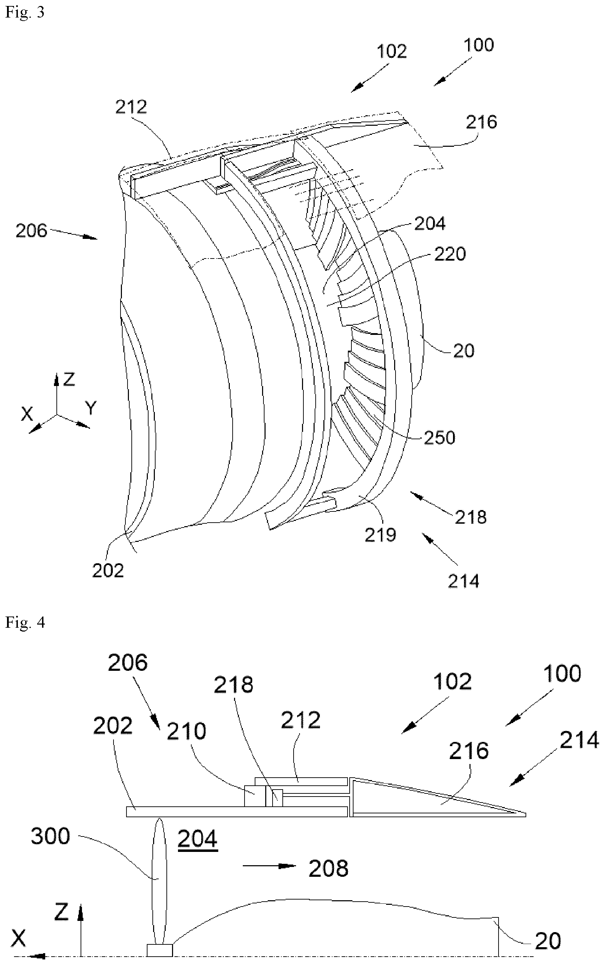

La Fig. 2 et la Fig. 3 montrent le turboréacteur double flux 100 qui présente une nacelle 102 et un moteur 20 qui est logé à l'intérieur de la nacelle 102 et qui comporte un carter de soufflante 202. Le moteur 20 est matérialisé par sa partie arrière d'éjection.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

La Fig. 2 et la Fig. 3 montrent le turboréacteur double flux 100 dans deux positions d'utilisation différentes et la Fig. 4 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 formant une surface aérodynamique qui sont montrés en transparence sur la Fig. 3 et dont une partie est découpée sur les Figs. 2 et 3.

La nacelle 102 présente un ensemble mobile 214 qui présente un capot mobile 216 (également en transparence sur la Fig. 3) dont une partie est découpée sur les Figs. 2 et 3 et qui forme les parois extérieures de la tuyère.

La nacelle 102 présente également un coulisseau 218. Le coulisseau 218 prend ici la forme d'un cylindre à parois ajourées. Le capot mobile 216 est fixé au et en aval du coulisseau 218 par rapport au sens d'écoulement du flux d'air dans le turboréacteur double flux 100.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (Fig. 2) et une position reculée (Fig. 3) et inversement. En position avancée, le coulisseau 218 est positionné le plus en avant possible par rapport au sens d'écoulement de manière à ce que le capot mobile 216 soit rapproché des panneaux extérieurs 212 et du carter de soufflante 202 et forme ainsi une surface aérodynamique. En position reculée, le coulisseau 218 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100.

La translation du coulisseau 218 est réalisée par tous moyens appropriés, comme par exemple, des systèmes de glissières entre la structure fixe 206 et le coulisseau 218.

La nacelle 102 comporte également un ensemble d'actionneurs (non représentés) assurant le déplacement en translation du coulisseau 218 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au coulisseau 218. Afin d'orienter le flux d'air sortant de la fenêtre 220, des cascades peuvent être fixées sur le coulisseau 218 en regard de la fenêtre 220.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La nacelle 102 comporte une pluralité de lames 250, chacune étant montée mobile en rotation sur le coulisseau 218 autour d'un axe de rotation qui est ici globalement parallèle à l'axe longitudinal X. Chaque lame 250 est ainsi mobile entre une position escamotée (Fig. 2) dans laquelle la lame 250 est en dehors de la veine 204 et une position déployée (Fig. 3) dans laquelle la lame 250 est en travers de la veine 204 afin de dévier le flux secondaire 208 vers la fenêtre 220.

Chaque lame 250 est montée mobile au niveau d'une première extrémité tandis qu'une deuxième extrémité se rapproche du moteur 20 lorsque la lame 250 est déployée afin d'obturer au mieux la veine 204.

Les lames 250 sont décalées angulairement de proche en proche autour de l'axe longitudinal X. Le nombre de lames 250 ainsi que la forme de chacune d'elles dépendent des dimensions du turboréacteur double flux 100 ainsi que de la largeur de chaque lame 250 afin qu'en position déployée, les lames 250 obturent la plus grande partie de la veine 204.

Le passage de la position escamotée à la position déployée s'effectue par une rotation de la lame 250 vers l'intérieur du turboréacteur 100.

La position escamotée peut être adoptée lorsque le coulisseau 218 est en position avancée ou en position reculée. La position déployée ne peut être adoptée que lorsque le coulisseau 218 est en position reculée.

Le coulisseau 218 porte également un système de manœuvre 400 qui déplace chaque lame 250 de la position escamotée à la position déployée en même temps que le coulisseau 218 se déplace de la position avancée à la position reculée, et inversement et qui est décrit ci-dessous.

Le fonctionnement consiste ainsi, à partir de la position avancée/escamotée, à commander l'activation des actionneurs pour déplacer le coulisseau 218 de la position avancée à la position reculée. Au cours de ce déplacement, le système de manœuvre 400 déplace les lames 250 de la position escamotée à la position déployée.

A l'inverse, le fonctionnement consiste ainsi, à partir de la position reculée/déployée, à commander l'activation des actionneurs pour déplacer le coulisseau 218 de la position reculée à la position avancée. Au cours de ce déplacement, le système de manœuvre 400 déplace les lames 250 de la position déployée à la position escamotée.

L'utilisation des lames 250 montées rotatives sur le coulisseau 218 permet un allégement de l'ensemble par rapport à l'utilisation de portes d'inversion de l'état de la technique.

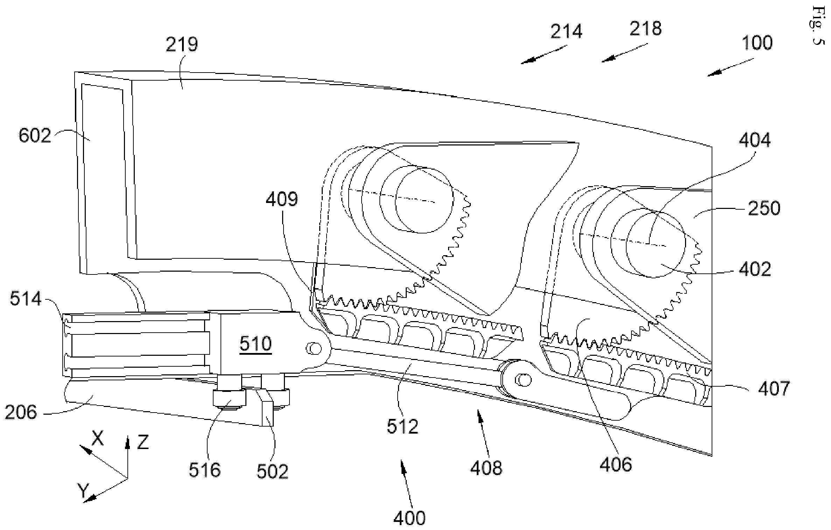

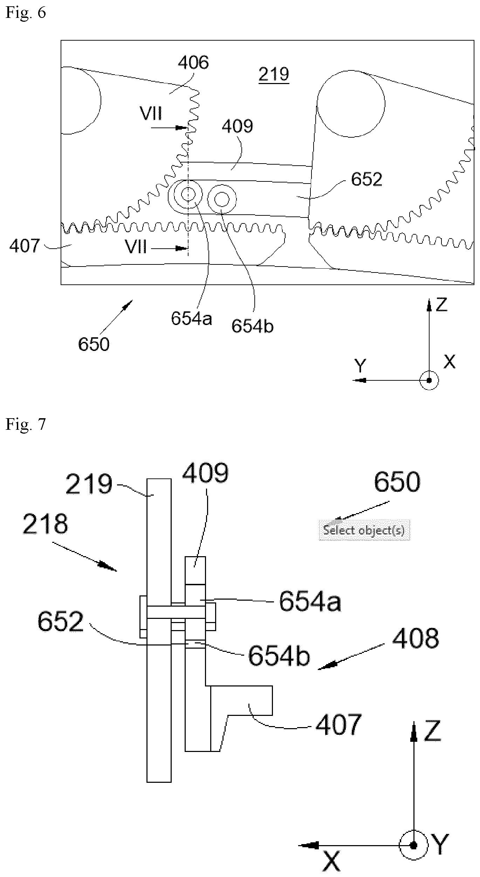

La Fig. 5 montre le système de manœuvre 400 et les Figs. 6 à 10 montrent des coupes du système de manœuvre 400 selon différents modes de réalisation.

Pour chaque lame 250, le système de manœuvre 400 comporte un arbre 402 qui est monté mobile en rotation sur le coulisseau 218 autour d'un axe de rotation 404, et sur lequel la lame 250 est fixée. Sur la Fig. 5, chaque lame 250 est tronquée pour faciliter la compréhension du mécanisme et seules deux lames 250 sont montrées.

Pour chaque lame 250, le système de manœuvre 400 comporte également un secteur denté 406 fixé sur l'arbre 402 et coaxial avec l'axe de rotation 404.

Le système de manœuvre 400 comporte également un arc denté 408 qui est coaxial avec l'axe longitudinal X. L'arc denté 408 est monté mobile en rotation sur l'ensemble mobile 214 et plus particulièrement sur le coulisseau 218 autour de l'axe longitudinal X. Dans le mode de réalisation de l'invention présenté à la Fig. 5, l'arc denté 408 comporte une plaque support 409 qui ici prend globalement la forme d'une couronne et, pour chaque secteur denté 406, un sous-arc denté 407 fixé à la plaque support 409. Cette disposition permet un réglage indépendant de chaque sous-arc denté 407 par rapport à la plaque support 409, mais il est également possible de prévoir un arc denté qui s'étend sur l'ensemble des secteurs dentés 406. Cette disposition permet aussi l'utilisation de matériaux différents pour la réalisation de la plaque support 409 et les sous-arcs dentés 407 sans impacter la capacité de dilatation de l'arc denté 408 lorsqu'il est soumis à des variations de température.

La fixation de chaque sous-arc denté 407 à la plaque support 409 s'effectue par exemple par des systèmes de vissage.

Les dents de l'arc denté 408, ici de chaque sous-arc denté 407, engrènent avec les dents de chaque secteur denté 406. Ainsi, un déplacement en rotation de l'arc denté 408 entraîne la rotation de chaque secteur denté 406 et donc de la lame 250 associée.

Chaque lame 250 s'étend dans un plan globalement perpendiculaire à l'axe longitudinal X.

Chaque lame 250 est montée mobile sur le pourtour du coulisseau 218. Lorsque les lames 250 sont en position escamotée, elles se superposent selon l'axe longitudinal X.

Le système de manœuvre 400 comporte également un chariot 510 qui est monté mobile en translation sur le coulisseau 218 dans un plan perpendiculaire à l'axe longitudinal X entre une première position correspondant à la position escamotée et une deuxième position correspondant à la position déployée.

Le système de manœuvre 400 comporte également une bielle 512 montée articulée entre le chariot 510 et l'arc denté 408. Ainsi, lorsque le chariot 510 se déplace de la première position vers la deuxième position, la bielle 512 entraîne la rotation de l'arc denté 408 et donc la rotation de chaque secteur denté 406 et donc de la lame 250 associée qui passe de la position escamotée à la position déployée et inversement lorsque le chariot 510 se déplace de la deuxième position vers la première position.

La translation du chariot 510 sur le coulisseau 218 est réalisée par des rails de guidage 514 ici en queue d'aronde.

La structure fixe 206 comporte une nervure 502 et le chariot 510 est équipé d'un U de guidage 516 qui chevauche la nervure 502. Ainsi, lors du déplacement du coulisseau 218 de la position avancée à la position reculée, la nervure 502 présente une forme appropriée pour déplacer le U de guidage 516 et donc le chariot 510 de la première position vers la deuxième position lorsque le coulisseau 218 se déplace de la position avancée à la position reculée, et inversement. Le U de guidage 516 est réalisé ici par deux galets.

La nervure 502 présente ainsi par exemple une première partie qui est rectiligne et parallèle à l'axe longitudinal X. Cette première partie correspond à un déplacement du coulisseau 218 à partir de la position avancée sans déplacement du chariot 510 qui reste en première position. La nervure 502 présente ensuite une partie courbée qui correspond à l'arrivée du coulisseau 218 à une position intermédiaire entre la position avancée et la position reculée, et où à partir de cette position intermédiaire, le chariot 510 est déplacé vers la deuxième position.

La nervure 502 présente une forme qui est adaptée pour permettre la rotation de la lame 250 de la position escamotée à la position déployée lorsque le coulisseau 218 passe de la position avancée à la position reculée. Et réciproquement, la rainure 502 présente une forme qui est adaptée pour permettre la rotation de la lame 250 de la position déployée à la position escamotée lorsque le coulisseau 218 passe de la position reculée à la position avancée.

Le déplacement de toutes les lames 250 est alors relativement simple à mettre en œuvre et il ne nécessite pas d'actionneurs autres que ceux nécessaires au déplacement du coulisseau 218.

Dans le mode de réalisation de l'invention présenté à la Fig. 5, le coulisseau 218 comporte un profilé en U 219 coaxial avec l'axe longitudinal X et ouvert vers l'axe longitudinal X. Le profilé en U 219 forme une cage 602 à l'intérieur duquel l'arc denté 408 et les secteurs dentés 406 sont montés mobiles en rotation et à l'extérieur duquel les lames 250 sont montées mobiles en rotation et où les arbres 402 traversent une paroi du profilé en U 219.

Les Figs. 6 à 9 montrent des systèmes de guidage radial 650, 750, 850 selon différents modes de réalisation. Chaque système de guidage radial 650, 750, 850 assure un guidage en rotation autour de l'axe longitudinal X de l'arc denté 408 par rapport au coulisseau 218, c'est-à-dire un guidage radial par rapport à l'axe longitudinal X, et plus particulièrement ici de la plaque support 409 par rapport à une paroi du profilé en U 219.

Dans le mode de réalisation de la Fig. 6 et de la Fig. 7, le système de guidage radial 650 comporte au moins une fenêtre 652 réalisée dans un plan perpendiculaire à l'axe longitudinal X à travers l'arc denté 408, ici à travers la plaque support 409, où la fenêtre 652 prend une forme arquée coaxiale avec l'axe longitudinal X. Le système de guidage radial 650 comporte préférentiellement une pluralité de fenêtres 652 réparties le long de l'arc denté 408 ou une fenêtre 652 présentant une grande ouverture angulaire autour de l'axe longitudinal X.

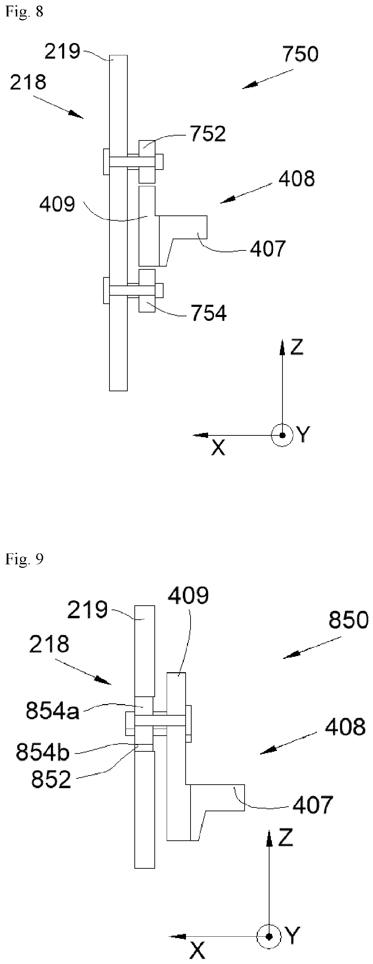

Pour chaque fenêtre 652, le système de guidage radial 650 comporte au moins deux galets 654a-b, chacun étant monté mobile en rotation sur le coulisseau 218, ici la paroi du profilé en U 219, autour d'un axe de rotation parallèle à l'axe longitudinal X. Chaque galet 654a-b est monté à l'intérieur de la fenêtre 652 de manière à ce que le bord extérieur de la fenêtre 652 soit en appui sur l'un des galets 654a et glisse sur celui-ci et de manière à ce que le bord intérieur de la fenêtre 652 soit en appui sur l'autre galet 654b et glisse sur celui-ci. Le bord intérieur de la fenêtre 652 est le bord coaxial avec l'axe longitudinal X et présentant le plus petit rayon, et le bord extérieur de la fenêtre 652 est le bord coaxial avec l'axe longitudinal X et présentant le plus grand rayon. Dans le mode de réalisation de la Fig. 8, le système de guidage radial 750 comporte une pluralité de galets extérieurs 752 et une pluralité de galets intérieurs 754. L'arc denté 408, ici la plaque support 409, prend la forme d'une couronne et les galets extérieurs 752 sont disposés le long du bord extérieur de la couronne et les galets intérieurs 754 sont disposés le long du bord intérieur de la couronne. Les galets extérieurs 752 et les galets intérieurs 754 sont répartis angulairement autour de l'axe longitudinal X pour être en contact en plusieurs points avec l'arc denté 408.

Chaque galet extérieur 752 et chaque galet intérieur 754 sont montés mobiles en rotation sur le coulisseau 218, ici la paroi du profilé en U 219, autour d'un axe de rotation parallèle à l'axe longitudinal X. Les galets extérieurs 752 et les galets intérieurs 754 prennent ainsi la couronne en sandwich, de manière à ce que les bords extérieurs de la couronne soient en appui sur chaque galet extérieur 752 et à ce que les bords intérieurs de la couronne soient en appui sur chaque galet intérieur 754 et glissent sur ceux-ci.

Dans le mode de réalisation de la Fig. 9, le système de guidage radial 850 comporte au moins une fenêtre 852 réalisée dans le coulisseau 218, ici la paroi du profilé en U 219, dans un plan perpendiculaire à l'axe longitudinal X à travers une paroi du coulisseau 218, où la fenêtre 852 prend une forme arquée coaxiale avec l'axe longitudinal X.

Le système de guidage radial 850 comporte préférentiellement une pluralité de fenêtres 852 réparties le long du coulisseau 218 à l'arrière de l'arc denté 408 ou une fenêtre 852 présentant une grande ouverture angulaire autour de l'axe longitudinal X.

Comme pour le mode de réalisation des Figs. 6 et 7, pour chaque fenêtre 852, le système de guidage radial 850 comporte au moins deux galets 854a-b, chacun étant monté mobile en rotation sur l'arc denté 408, ici sur la plaque support 409, autour d'un axe de rotation parallèle à l'axe longitudinal X. Chaque galet 854a-b est monté à l'intérieur de la fenêtre 852 de manière à ce que le bord extérieur de la fenêtre 852 soit en appui sur l'un des galets 854a et glisse sur celui-ci et de manière à ce que le bord intérieur de la fenêtre 852 soit en appui sur l'autre galet 854b et glisse sur celui-ci.

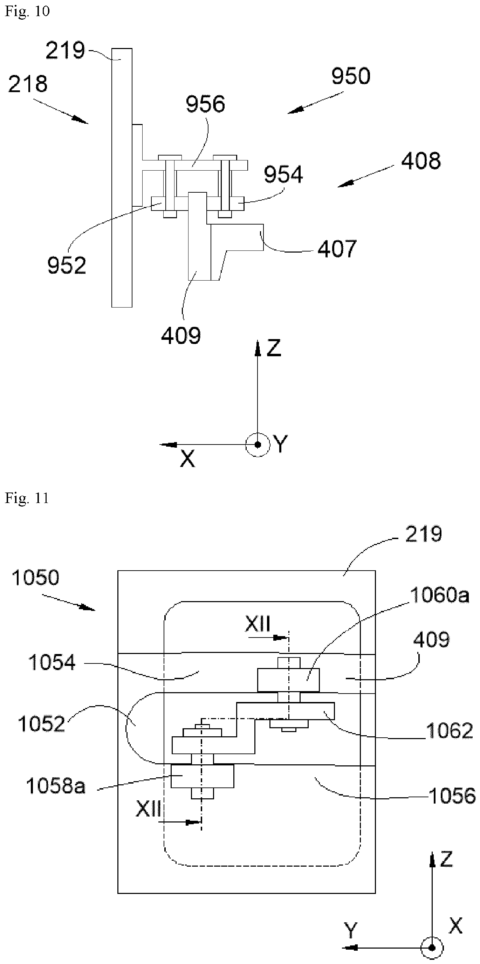

Pour chacun des modes de réalisation décrits ci-dessus, l'axe de chaque galet 654a-b, 752, 754, 854a-b peut être monté par l'intermédiaire d'un système d'excentrique qui permet de régler la position dudit axe et ainsi assurer un bon positionnement du galet contre sa surface de roulage. La Fig. 10 montre un système de positionnement axial 950 selon un premier mode de réalisation qui assure un positionnement parallèlement à l'axe longitudinal X entre l'arc denté 408 et le coulisseau 218, et plus particulièrement ici entre la plaque support 409 et une paroi du profilé en U 219.

Dans le mode de réalisation de la Fig. 10, le système de positionnement axial 950 comporte une pluralité de galets avant 952 et une pluralité de galets arrière 954. Chaque galet avant 952 est disposé contre une face avant de l'arc denté 408, ici de la plaque support 409, et chaque galet arrière 954 est disposé contre une face arrière de l'arc denté 408, ici de la plaque support 409. Les galets avant 952 et les galets arrière 954 sont répartis angulairement autour de l'axe longitudinal X pour être en contact en plusieurs points avec l'arc denté 408. Préférentiellement, pour chaque galet avant 952, un galet arrière 954 est aligné avec ledit galet avant 952 parallèlement à l'axe longitudinal X.

Chaque galet avant 952 et chaque galet arrière 954 sont montés mobiles en rotation sur le coulisseau 218, ici la paroi du profilé en U 219, autour d'un axe de rotation s'étendant radialement par rapport à l'axe longitudinal X.

Les galets avant 952 et les galets arrière 954 prennent ainsi l'arc denté 408 en sandwich, de manière à ce que chaque galet avant 952 et chaque galet arrière 954 roulent respectivement sur la face avant et arrière de l'arc denté 408 lors de la rotation de celui-ci.

Dans le mode de réalisation de la Fig. 10, l'axe de chaque galet 952, 952 est monté sur une potence 956 qui est elle-même fixée sur le coulisseau 218.

L'axe de chaque galet avant 952 et arrière 954 peut être monté par l'intermédiaire d'un système d'excentrique qui permet de régler la position dudit axe et ainsi assurer un bon positionnement du galet contre sa surface de roulage.

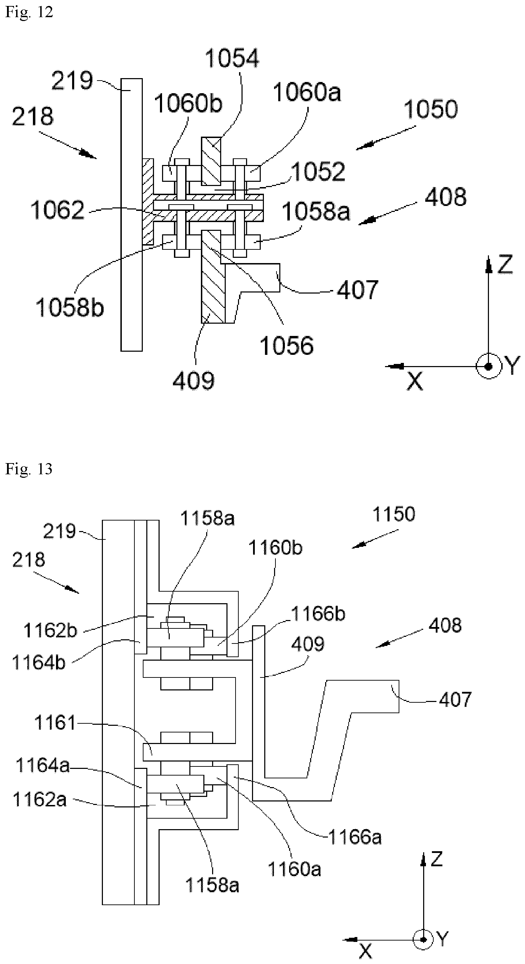

La Fig. 11 et le Fig. 12 montrent un système de positionnement axial 1050 selon un deuxième mode de réalisation qui assure un positionnement parallèlement à l'axe longitudinal X entre l'arc denté 408 et le coulisseau 218, et plus particulièrement ici entre la plaque support 409 et une paroi du profilé en U 219.

Dans le deuxième mode de réalisation, l'arc denté 408, ici de la plaque support 409 présente au moins une fenêtre 1052 réalisée dans un plan perpendiculaire à l'axe longitudinal X à travers l'arc denté 408, ici à travers la plaque support 409. La fenêtre 1052 est bordée par une bande extérieure 1054 et une bande intérieure 1056 qui sont réalisées dans la plaque support 409. La bande extérieure 1054 s'étend au-delà de la fenêtre 1052 par rapport à l'axe longitudinal X et la bande intérieure 1056 s'étend en-deçà de la fenêtre 1052 par rapport à l'axe longitudinal X. Le système de positionnement axial 1050 comporte également au moins une première paire de galets 1058a-b qui enserrent la bande intérieure 1056 et au moins une deuxième paire de galets 1060a-b qui enserrent la bande extérieure 1054.

L'un des galets 1058b de la première paire est disposé contre une face avant de la bande intérieure 1056 et l'autre galet 1058a de la première paire est disposé contre une face arrière de la bande intérieure 1056.

De la même manière, l'un des galets 1060b de la deuxième paire est disposé contre une face avant de la bande extérieure 1054 et l'autre galet 1060a de la deuxième paire est disposé contre une face arrière de la bande extérieure 1054.

Le système de positionnement axial 1050 peut présenter plusieurs fenêtres 1052 réparties le long de l'arc denté 408 et la fenêtre 1052 présente préférentiellement une forme arquée coaxiale avec l'axe longitudinal X.

Il peut y avoir plusieurs premières paires de galets 1058a-b et deuxièmes paires de galets 1060a-b répartis angulairement autour de l'axe longitudinal X pour être en contact en plusieurs points avec l'arc denté 408.

Préférentiellement, les deux galets 1058a-b, 1060a-b de la même paire sont alignés parallèlement à l'axe longitudinal X.

Chaque galet 1058a-b, 1060a-b est monté mobile en rotation sur le coulisseau 218, ici par l'intermédiaire d'une potence 1062 solidaire de la paroi du profilé en U 219, autour d'un axe de rotation s'étendant radialement par rapport à l'axe longitudinal X.

Les galets 1058a-b, 1060a-b d'une même paire prennent ainsi l'arc denté 408 en sandwich, de manière à ce que chaque galet 1058a-b, 1060a-b roule sur une face de l'arc denté 408 lors de la rotation de celui-ci.

L'axe de chaque galet 1058a-b, 1060a-b peut être monté par l'intermédiaire d'un système d'excentrique qui permet de régler la position dudit axe et ainsi assurer un bon positionnement du galet contre sa surface de roulage.

La Fig. 13 montre un système de positionnement axial 1150 selon un troisième mode de réalisation qui assure un positionnement parallèlement à l'axe longitudinal X entre l'arc denté 408 et le coulisseau 218, et plus particulièrement ici entre la plaque support 409 et une paroi du profilé en U 219.

Dans le troisième mode de réalisation, l'arc denté 408, ici la plaque support 409, porte au moins une première paire de galets 1158a-b et au moins une deuxième paire de galets 1160a-b. Dans le mode de réalisation de l'invention présenté sur la Fig. 13, la première paire est dans le plan de la feuille et la deuxième paire est à l'arrière du plan de la feuille, c'est-à-dire qu'elles sont décalées comme les paires du deuxième mode de réalisation de la Fig. 11.

Chaque galet 1158a-b, 1160a-b est monté mobile en rotation sur l'arc denté 408, ici par l'intermédiaire d'une potence 1161 solidaire de la plaque support 409, autour d'un axe de rotation s'étendant radialement par rapport à l'axe longitudinal X.

Le coulisseau 218 comporte une rainure intérieure 1162a et une rainure extérieure 1162b qui s'étendent de manière coaxiale autour de l'axe longitudinal X. La rainure intérieure 1162a s'étend en-deçà de la rainure extérieure 1162b par rapport à l'axe longitudinal X et l'ouverture de la rainure intérieure 1162a est en regard de l'ouverture de la rainure extérieure 1162b. Chaque rainure 1162a-b comporte ainsi une paroi avant 1164a-b et une paroi arrière 1166a-b qui sont solidaires du coulisseau 218 ici de la plaque support 219. Dans le mode de réalisation de l'invention présenté à la Fig. 13, chaque paroi avant 1164a-b est réalisée par une paroi fixée à la plaque support 219 et chaque paroi arrière 1166a-b est réalisée par une cornière fixée à la plaque support 219.

Les galets 1158a-b, 1160a-b sont logés à l'intérieur des rainures 1162a-b de manière à ce qu'un premier galet 1158a de la première paire est en appui et roule contre la paroi avant 1164a de la rainure intérieure 1162a, de manière à ce que le deuxième galet 1158b de la première paire est en appui et roule contre la paroi avant 1164b de la rainure extérieure 1162b, de manière à ce qu'un premier galet 1160a de la deuxième paire est en appui et roule contre la paroi arrière 1166a de la rainure intérieure 1162a, et de manière à ce que le deuxième galet 1160b de la deuxième paire est en appui et roule contre la paroi arrière 1166b de la rainure extérieure 1162b. Il peut y avoir plusieurs premières paires de galets 1158a-b et deuxièmes paires de galets 1160a-b répartis angulairement autour de l'axe longitudinal X pour être en contact en plusieurs points avec l'arc denté 408.

Préférentiellement, les deux galets 1158a-b, 1160a-b de la même paire sont alignés parallèlement à l'axe longitudinal X.

L'axe de chaque galet 1158a-b, 1160a-b peut être monté par l'intermédiaire d'un système d'excentrique qui permet de régler la position dudit axe et ainsi assurer un bon positionnement du galet contre sa surface de roulage.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202),
- un ensemble mobile (214) présentant un capot mobile (216) et un coulisseau (218), le capot mobile (216) étant fixé au coulisseau (218), le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102),
- une pluralité de lames (250), chacune comportant une première extrémité montée mobile en rotation sur le coulisseau (218) autour d'un axe de rotation et où les lames (250) sont décalées angulairement de proche en proche autour de l'axe longitudinal (X), où chaque lame (250) est mobile entre une position escamotée dans laquelle la lame (250) est en dehors de la veine (204) et une position déployée dans laquelle la lame (250) est en travers de la veine (204),
- un ensemble d'actionneurs assurant le déplacement du coulisseau (218) entre la position avancée et la position reculée, et inversement, et
- un système de manœuvre (400) destiné à déplacer chaque lame (250) de la position escamotée à la position déployée en même temps que le coulisseau (218) se déplace de la position avancée à la position reculée et inversement, le système de manœuvre (400) comporte, pour chaque lame (250), un arbre (402) monté mobile en rotation sur le coulisseau (218) autour d'un axe de rotation (404), et sur lequel la lame (250) est fixée,
**caractérisé en ce que** le système de manœuvre (400) comporte :
- pour chaque lame (250), un secteur denté (406) fixé sur l'arbre (402) et coaxial avec l'axe de rotation (404),
- un arc denté (408) coaxial avec l'axe longitudinal (X), monté mobile en rotation sur le coulisseau (218) autour de l'axe longitudinal (X), où les dents de l'arc denté (408) engrènent avec les dents de chaque secteur denté (406),
- un chariot (510) monté mobile en translation sur le coulisseau (218) dans un plan perpendiculaire à l'axe longitudinal (X) entre une première position correspondant à la position escamotée et une deuxième position correspondant à la position déployée,
- une bielle (512) montée articulée entre le chariot (510) et l'arc denté (408),
- une nervure (502) solidaire de la structure fixe (206), et
- un U de guidage (516) solidaire du chariot (510) et qui chevauche la nervure (502), où la nervure (502) présente une forme appropriée pour déplacer le U de guidage (516) et donc le chariot (510) de la première position vers la deuxième position lorsque le coulisseau (218) se déplace de la position avancée à la position reculée, et inversement.

2. Turboréacteur double flux (100) selon la revendication 1, **caractérisé en ce qu'**il comporte un système de guidage radial (650, 750, 850) qui assure un guidage en rotation autour de l'axe longitudinal (X) de l'arc denté (408) par rapport au coulisseau (218).

3. Turboréacteur double flux (100) selon la revendication 2, **caractérisé en ce que** le système de guidage radial (650) comporte au moins une fenêtre (652) réalisée dans un plan perpendiculaire à l'axe longitudinal (X) à travers l'arc denté (408), et pour chaque fenêtre (652), au moins deux galets (654a-b), chacun étant monté mobile en rotation sur le coulisseau (218) autour d'un axe de rotation parallèle à l'axe longitudinal (X), où chaque galet (654a-b) est monté à l'intérieur de la fenêtre (652) de manière à ce que le bord extérieur de la fenêtre (652) soit en appui sur l'un des galets (654a) et glisse sur celui-ci et de manière à ce que le bord intérieur de la fenêtre (652) soit en appui sur l'autre galet (654b) et glisse sur celui-ci.

4. Turboréacteur double flux (100) selon la revendication 2, **caractérisé en ce que** l'arc denté (408) prend la forme d'une couronne, **en ce que** le système de guidage radial (750) comporte une pluralité de galets extérieurs (752) disposés le long du bord extérieur de la couronne et une pluralité de galets intérieurs (754) disposés le long du bord intérieur de la couronne, et **en ce que** chaque galet extérieur (752) et chaque galet intérieur (754) sont montés mobiles en rotation sur le coulisseau (218), où les bords extérieurs de la couronne sont en appui sur chaque galet extérieur (752) et où les bords intérieurs de la couronne sont en appui sur chaque galet intérieur (754) et glissent sur ceux-ci.

5. Turboréacteur double flux (100) selon la revendication 2, **caractérisé en ce que** le système de guidage radial (850) comporte au moins une fenêtre (852) réalisée dans le coulisseau (218) dans un plan perpendiculaire à l'axe longitudinal (X) à travers une paroi du coulisseau (218), et pour chaque fenêtre (852), au moins deux galets (854a-b), chacun étant monté mobile en rotation sur l'arc denté (408) autour d'un axe de rotation parallèle à l'axe longitudinal (X), où chaque galet (854a-b) est monté à l'intérieur de la fenêtre (852) de manière à ce que le bord extérieur de la fenêtre (852) soit en appui sur l'un des galets (854a) et glisse sur celui-ci et de manière à ce que le bord intérieur de la fenêtre (852) soit en appui sur l'autre galet (854b) et glisse sur celui-ci.

6. Turboréacteur double flux (100) selon l'une des revendications précédentes, **caractérisé en ce qu'**il comporte un système de positionnement axial (950, 1050) qui assure un positionnement parallèlement à l'axe longitudinal (X) entre l'arc denté (408) et le coulisseau (218).

7. Turboréacteur double flux (100) selon la revendication 6, **caractérisé en ce que** le système de positionnement axial (950) comporte une pluralité de galets avant (952) disposés contre une face avant de l'arc denté (408) et une pluralité de galets arrière (954) disposés contre une face arrière de l'arc denté (408), où chaque galet avant (952) et chaque galet arrière (954) sont montés mobiles en rotation sur le coulisseau (218) autour d'un axe de rotation s'étendant radialement par rapport à l'axe longitudinal (X), et où les galets avant (952) et les galets arrière (954) prennent l'arc denté (408) en sandwich et roulent sur la face respectivement avant et arrière de l'arc denté (408).

8. Turboréacteur double flux (100) selon la revendication 6, **caractérisé en ce que** le système de positionnement axial (1050) comporte une fenêtre (1052) réalisée dans un plan perpendiculaire à l'axe longitudinal (X) à travers l'arc denté (408) et bordée par une bande extérieure (1054) et une bande intérieure (1056), au moins une première paire de galets (1058a-b) qui enserrent la bande intérieure (1056) et au moins une deuxième paire de galets (1060a-b) qui enserrent la bande extérieure (1054), où chaque galet (1058a-b, 1060a-b) est monté mobile en rotation sur le coulisseau (218) autour d'un axe de rotation s'étendant radialement par rapport à l'axe longitudinal (X).

9. Turboréacteur double flux (100) selon la revendication 6, **caractérisé en ce que** le système de positionnement axial (1150) comporte au moins une première paire de galets (1158a-b) et au moins une deuxième paire de galets (1160a-b) où chaque galet (1158a-b, 1160a-b) est monté mobile en rotation sur l'arc denté (408) autour d'un axe de rotation s'étendant radialement par rapport à l'axe longitudinal (X), une rainure intérieure (1162a) et une rainure extérieure (1162b) solidaires du coulisseau (218), chacune s'étendant de manière coaxiale autour de l'axe longitudinal (X), où l'ouverture de la rainure intérieure (1162a) est en regard de l'ouverture de la rainure extérieure (1162b), où chaque rainure (1162a-b) comporte ainsi une paroi avant (1164a-b) et une paroi arrière (1166a-b), où les galets (1158a-b, 1160a-b) sont logés à l'intérieur des rainures (1162a-b) de manière à ce qu'un premier galet (1158a) de la première paire est en appui et roule contre la paroi avant (1164a) de la rainure intérieure (1162a), de manière à ce que le deuxième galet (1158b) de la première paire est en appui et roule contre la paroi avant (1164b) de la rainure extérieure (1162b), de manière à ce qu'un premier galet (1160a) de la deuxième paire est en appui et roule contre la paroi arrière (1166a) de la rainure intérieure (1162a), et de manière à ce que le deuxième galet (1160b) de la deuxième paire est en appui et roule contre la paroi arrière (1166b) de la rainure extérieure (1162b).

10. Aéronef (10) comportant au moins un turboréacteur double flux (100) selon l'une des revendications précédentes.

## Patentansprüche

1. Zweistrom-Turbinenstrahltriebwerk (100) mit einer Längsachse (X), umfassend einen Antrieb (20) und eine den Antrieb (20) umgebende Gondel (102), die ein Gebläsegehäuse (202) aufweist, wobei zwischen der Gondel (102) und dem Antrieb (20) eine Bahn (204) eines Sekundärstroms (208) begrenzt ist und wobei ein Luftstrom in einer Strömungsrichtung zirkuliert, wobei die Gondel (102) Folgendes aufweist:
- eine am Gebläsegehäuse (202) befestigte feste Struktur (206),
- eine bewegliche Anordnung (214), die eine bewegliche Abdeckung (216) und einen Schieber (218) aufweist, wobei die bewegliche Abdeckung (216) am Schieber (218) befestigt ist, wobei der Schieber (218) an der festen Struktur (206) in einer Translationsrichtung zwischen einer vorgeschobenen Position, in der der Schieber (218) so positioniert ist, dass die bewegliche Abdeckung (216) dem Gebläsegehäuse (202) angenähert ist, und einer zurückgezogenen Position, in der der Schieber (218) so positioniert ist, dass die bewegliche Abdeckung (216) vom Gebläsegehäuse (202) entfernt ist, um dazwischen ein offenes Fenster (220) zwischen der Bahn (204) und dem Äußeren der Gondel (102) zu definieren, translatorisch bewegbar ist,
- mehrere Blätter (250), die jeweils ein erstes Ende aufweisen, das um eine Drehachse drehbar am Schieber (218) montiert ist, wobei die Blätter (250) um die Längsachse (X) herum nach und nach winkelmäßig versetzt sind, wobei jedes Blatt (250) zwischen einer eingefahrenen Position, in der sich das Blatt (250) außerhalb der Bahn (204) befindet, und einer ausgefahrenen Position, in der sich das Blatt (250) quer zur Bahn (204) befindet, bewegbar ist,
- einen Satz von Aktoren, die die Bewegung des Schiebers (218) zwischen der vorgeschobenen Position und der zurückgezogenen Position und umgekehrt gewährleisten, und
- ein Betätigungssystem (400), das dazu bestimmt ist, jedes Blatt (250) aus der eingefahrenen Position in die ausgefahrene Position zu bewegen, während sich der Schieber (218) aus der vorgeschobenen Position in die zurückgezogene Position bewegt, und umgekehrt, wobei das Betätigungssystem (400) für jedes Blatt (250) eine Welle (402) aufweist, die um eine Drehachse (404) drehbar am Schieber (218) montiert ist und an der das Blatt (250) befestigt ist,
**dadurch gekennzeichnet, dass** Betätigungssystem (400) Folgendes aufweist:
- für jedes Blatt (250) einen Zahnsektor (406), der an der Welle (402) befestigt und koaxial zur Drehachse (404) angeordnet ist,
- einen zur Längsachse (X) koaxialen Zahnbogen (408), der um die Längsachse (X) drehbar am Schieber (218) montiert ist, wobei die Zähne des Zahnbogens (408) mit den Zähnen jedes Zahnsektors (406) kämmen,
- einen Schlitten (510), der in einer zur Längsachse (X) senkrechten Ebene zwischen einer ersten Position, die der eingefahrenen Position entspricht, und einer zweiten Position, die der ausgefahrenen Position entspricht, translatorisch beweglich am Schieber (218) montiert ist,
- eine Verbindungsstange (512), die zwischen dem Schlitten (510) und dem Zahnbogen (408) angelenkt ist,
- eine mit der festen Struktur (206) fest verbundene Rippe (502) und
- ein mit dem Schlitten (510) fest verbundenes Führungs-U (516), das die Rippe (502) überlappt, wobei die Rippe (502) eine geeignete Form aufweist, um das Führungs-U (516) und damit den Schlitten (510) aus der ersten Position in die zweite Position zu bewegen, wenn sich der Schieber (218) aus der vorgeschobenen Position in die zurückgezogene Position bewegt, und umgekehrt.

2. Zweistrom-Turbinenstrahltriebwerk (100) nach Anspruch 1, **dadurch gekennzeichnet, dass** es ein radiales Führungssystem (650, 750, 850) aufweist, das eine Drehführung um die Längsachse (X) des Zahnbogens (408) in Bezug auf den Schieber (218) gewährleistet.

3. Zweistrom-Turbinenstrahltriebwerk (100) nach Anspruch 2, **dadurch gekennzeichnet, dass** das radiale Führungssystem (650) zumindest ein Fenster (652), das in einer zur Längsachse (X) senkrechten Ebene durch den Zahnbogen (408) ausgeführt ist, und für jedes Fenster (652) zumindest zwei Rollen (654a - b), die jeweils um eine zur Längsachse (X) parallele Drehachse drehbar am Schieber (218) montiert sind, aufweist, wobei jede Rolle (654a - b) innerhalb des Fensters (652) so montiert ist, dass die Außenkante des Fensters (652) an einer der Rollen (654a) anliegt und darauf gleitet und dass die Innenkante des Fensters (652) an der anderen Rolle (654b) anliegt und darauf gleitet.

4. Zweistrom-Turbinenstrahltriebwerk (100) nach Anspruch 2, **dadurch gekennzeichnet, dass** der Zahnbogen (408) die Form eines Kranzes aufweist, dass das radiale Führungssystem (750) mehrere entlang der Außenkante des Kranzes angeordnete äußere Rollen (752) und mehrere entlang der Innenkante des Kranzes angeordnete innere Rollen (754) aufweist und dass jede äußere Rolle (752) und jede innere Rolle (754) drehbar am Schieber (218) montiert sind, wobei die Außenkanten des Kranzes an jeder äußeren Rolle (752) anliegen und wobei die Innenkanten des Kranzes an jeder inneren Rolle (754) anliegen und darauf gleiten.

5. Zweistrom-Turbinenstrahltriebwerk (100) nach Anspruch 2, **dadurch gekennzeichnet, dass** das radiale Führungssystem (850) zumindest ein Fenster (852), das im Schieber (218) in einer zur Längsachse (X) senkrechten Ebene durch eine Wand des Schiebers (218) ausgeführt ist, und für jedes Fenster (852) zumindest zwei Rollen (854a - b), die jeweils um eine zur Längsachse (X) parallele Drehachse drehbar am Zahnbogen (408) montiert sind, aufweist, wobei jede Rolle (854a - b) so innerhalb des Fensters (852) montiert ist, dass die Außenkante des Fensters (852) an einer der Rollen (854a) anliegt und darauf gleitet und dass die Innenkante des Fensters (852) an der anderen Rolle (854b) anliegt und darauf gleitet.

6. Zweistrom-Turbinenstrahltriebwerk (100) nach einem der vorangehenden Ansprüche, **dadurch gekennzeichnet, dass** es ein axiales Positionierungssystem (950, 1050) aufweist, das eine zur Längsachse (X) parallele Positionierung zwischen dem Zahnbogen (408) und dem Schieber (218) gewährleistet.

7. Zweistrom-Turbinenstrahltriebwerk (100) nach Anspruch 6, **dadurch gekennzeichnet, dass** das axiale Positionierungssystem (950) mehrere vordere Rollen (952), die an einer Vorderseite des Zahnbogens (408) angeordnet sind, und mehrere hintere Rollen (954), die an einer Rückseite des Zahnbogens (408) angeordnet sind, aufweist, wobei jede vordere Rolle (952) und jede hintere Rolle (954) um eine Drehachse, die sich radial in Bezug auf die Längsachse (X) erstreckt, drehbar am Schieber (218) montiert sind und wobei die vorderen Rollen (952) und die hinteren Rollen (954) den Zahnbogen (408) einfassen und auf der Vorder- bzw. Rückseite des Zahnbogens (408) rollen.

8. Zweistrom-Turbinenstrahltriebwerk (100) nach Anspruch 6, **dadurch gekennzeichnet, dass** das axiale Positionierungssystem (1050) ein Fenster (1052), das in einer zur Längsachse (X) senkrechten Ebene durch den Zahnbogen (408) ausgeführt und von einem äußeren Band (1054) und einem inneren Band (1056) begrenzt wird, zumindest ein erstes Paar Rollen (1058a - b), die das innere Band (1056) einfassen, und zumindest ein zweites Paar Rollen (1060a - b), die das äußere Band (1054) einfassen, aufweist, wobei jede Rolle (1058a - b, 1060a - b) um eine Drehachse, die sich radial in Bezug auf die Längsachse (X) erstreckt, drehbar am Schieber (218) montiert ist.

9. Zweistrom-Turbinenstrahltriebwerk (100) nach Anspruch 6, **dadurch gekennzeichnet, dass** das axiale Positionierungssystem (1150) Folgendes aufweist: zumindest ein erstes Paar Rollen (1158a - b) und zumindest ein zweites Paar Rollen (1160a - b), wobei jede Rolle (1158a - b, 1160a - b) um eine Drehachse, die sich radial in Bezug auf die Längsachse (X) erstreckt, drehbar am Zahnbogen (408) montiert ist, eine innere Nut (1162a) und eine äußere Nut (1162b), die fest mit dem Schieber (218) verbunden sind und sich jeweils koaxial um die Längsachse (X) erstrecken, wobei die Öffnung der inneren Nut (1162a) der Öffnung der äußeren Nut (1162b) zugewandt ist, wobei jede Nut (1162a - -b) somit eine Vorderwand (1164a - b) und eine Rückwand (1166a - b) aufweist, wobei die Rollen (1158a - b, 1160a - b) innerhalb der Nuten (1162a - b) so untergebracht sind, dass eine erste Rolle (1158a) des ersten Paars an der Vorderwand (1164a) der inneren Nut (1162a) anliegt und rollt, dass die zweite Rolle (1158b) des ersten Paars an der Vorderwand (1164b) der äußeren Nut (1162b) anliegt und rollt, dass eine erste Rolle (1160a) des zweiten Paars an der Rückwand (1166a) der inneren Nut (1162a) anliegt und rollt und dass die zweite Rolle (1160b) des zweiten Paars an der Rückwand (1166b) der äußeren Nut (1162b) anliegt und rollt.

10. Luftfahrzeug (10), umfassend zumindest ein Zweistrom-Turbinenstrahltriebwerk (100) nach einem der vorangehenden Ansprüche.

## Claims

1. Turbofan engine (100) having a longitudinal axis (X) and comprising an engine (20) and a nacelle (102) surrounding the engine (20) which comprises a fan casing (202), in which a stream (204) of bypass air (208) is delimited between the nacelle (102) and the engine (20) and in which a flow of air circulates in a direction of flow, said nacelle (102) comprising:
- a fixed structure (206) fixed to the fan casing (202),
- a mobile assembly (214) having a mobile cowl (216) and a runner (218), the mobile cowl (216) being fixed to the runner (218), the runner (218) being translationally mobile on the fixed structure (206) in a direction of translation between an advanced position in which the runner (218) is positioned so that the mobile cowl (216) is close to the fan casing (202) and a back-off position in which the runner (218) is positioned so that the mobile cowl (216) is away from the fan casing (202) to define between them a window (220) that is open between the stream (204) and the outside of the nacelle (102),
- a plurality of blades (250), each comprising a first end mounted to be rotationally mobile on the runner (218) about an axis of rotation and in which the blades (250) are angularly offset step-by-step about the longitudinal axis (X), in which each blade (250) is mobile between a retracted position in which the blade (250) is outside of the stream (204) and a deployed position in which the blade (250) is across the stream (204),
- a set of actuators ensuring the displacement of the runner (218) between the advanced position and the back-off position, and vice versa, and
- a manoeuvring system (400) intended to displace each blade (250) from the retracted position to the deployed position at the same time as the runner (218) is displaced from the advanced position to the back-off position and vice versa, the manoeuvring system (400) comprises, for each blade (250), a shaft (402) mounted to be rotationally mobile on the runner (218) about an axis of rotation (404), and to which the blade (250) is fixed, **characterized in that** the manoeuvring system (400) comprises:
- for each blade (250), a toothed segment (406) fixed to the shaft (402) and coaxial with the axis of rotation (404),
- a toothed arc (408) coaxial with the longitudinal axis (X), mounted to be rotationally mobile on the runner (218) about the longitudinal axis (X), in which the teeth of the toothed arc (408) mesh with the teeth of each toothed segment (406),
- a slip (510) mounted to be translationally mobile on the runner (218) in a plane at right angles to the longitudinal axis (X) between a first position corresponding to the retracted position and a second position corresponding to the deployed position,
- a connecting rod (512) mounted articulated between the slip (510) and the toothed arc (408),
- a rib (502) integral to the fixed structure (206), and
- a guiding U (516) integral to the slip (510) and which straddles the rib (502), in which the rib (502) has an appropriate form for displacing the guiding U (516) and therefore the slip (510) from the first position to the second position when the runner (218) is displaced from the advanced position to the back-off position, and vice versa.

2. Turbofan engine (100) according to Claim 1, **characterized in that** it comprises a radial guiding system (650, 750, 850) which ensures a rotational guidance about the longitudinal axis (X) of the toothed arc (408) relative to the runner (218).

3. Turbofan engine (100) according to Claim 2, **characterized in that** the radial guiding system (650) comprises at least one window (652) produced in a plane at right angles to the longitudinal axis (X) through the toothed arc (408) and, for each window (652), at least two rollers (654a-b), each being mounted to be rotationally mobile on the runner (218) about an axis of rotation parallel to the longitudinal axis (X), in which each roller (654a-b) is mounted inside the window (652) so that the outer edge of the window (652) is bearing on one of the rollers (654a) and slips thereon and so that the inner edge of the window (652) is bearing on the other roller (654b) and slips thereon.

4. Turbofan engine (100) according to Claim 2, **characterized in that** the toothed arc (408) takes the form of a crown ring, **in that** the radial guiding system (750) comprises a plurality of outer rollers (752) disposed along the outer edge of the crown ring and a plurality of inner rollers (754) disposed along the inner edge of the crown ring, and **in that** each outer roller (752) and each inner roller (754) are mounted to be rotationally mobile on the runner (218), in which the outer edges of the crown ring are bearing on each outer roller (752) and in which the inner edges of the crown ring are bearing on each inner roller (754) and slip thereon.

5. Turbofan engine (100) according to Claim 2, **characterized in that** the radial guiding system (850) comprises at least one window (852) produced in the runner (218) in a plane at right angles to the longitudinal axis (X) through a wall of the runner (218), and, for each window (852), at least two rollers (854a-b), each being mounted to be rotationally mobile on the toothed arc (408) about an axis of rotation parallel to the longitudinal axis (X), in which each roller (854a-b) is mounted inside the window (852) so that the outer edge of the window (852) is bearing on one of the rollers (854a) and slips thereon and so that the inner edge of the window (852) is bearing on the other roller (854b) and slips thereon.

6. Turbofan engine (100) according to one of the preceding claims, **characterized in that** it comprises an axial positioning system (950, 1050) which ensures a positioning parallel to the longitudinal axis (X) between the toothed arc (408) and the runner (218).

7. Turbofan engine (100) according to Claim 6, **characterized in that** the axial positioning system (950) comprises a plurality of front rollers (952) disposed against a front face of the toothed arc (408) and a plurality of rear rollers (954) disposed against a rear face of the toothed arc (408), in which each front roller (952) and each rear roller (954) are mounted to be rotationally mobile on the runner (218) about an axis of rotation extending radially relative to the longitudinal axis (X), and in which the front rollers (952) and the rear rollers (954) sandwich the toothed arc (408) and roll on the respectively front and rear face of the toothed arc (408).

8. Turbofan engine (100) according to Claim 6, **characterized in that** the axial positioning system (1050) comprises a window (1052) produced in a plane at right angles to the longitudinal axis (X) through the toothed arc (408) and bordered by an outer strip (1054) and an inner strip (1056), at least one first pair of rollers (1058a-b) which grip the inner strip (1056) and at least one second pair of rollers (1060a-b) which grip the outer strip (1054), in which each roller (1058a-b, 1060a-b) is mounted to be rotationally mobile on the runner (218) about an axis of rotation extending radially relative to the longitudinal axis (X).

9. Turbofan engine (100) according to Claim 6, **characterized in that** the axial positioning system (1150) comprises at least one first pair of rollers (1158a-b) and at least one second pair of rollers (1160a-b), in which each roller (1158a-b, 1160a-b) is mounted to be rotationally mobile on the toothed arc (408) about an axis of rotation extending radially relative to the longitudinal axis (X), an inner groove (1162a) and an outer groove (1162b) integral to the runner (218), each extending coaxially about the longitudinal axis (X), in which the opening of the inner groove (1162a) is facing the opening of the outer groove (1162b), in which each groove (1162a-b) thus comprises a front wall (1164a-b) and a rear wall (1166a-b), in which the rollers (1158a-b, 1160a-b) are housed inside the grooves (1162a-b) so that a first roller (1158a) of the first pair is bearing on and rolls against the front wall (1164a) of the inner groove (1162a), so that the second roller (1158b) of the first pair is bearing on and rolls against the front wall (1164b) of the outer groove (1162b), so that a first roller (1160a) of the second pair is bearing on and rolls against the rear wall (1166a) of the inner groove (1162a), and so that the second roller (1160b) of the second pair is bearing on and rolls against the rear wall (1166b) of the outer groove (1162b).

10. Aircraft (10) comprising at least one turbofan engine (100) according to one of the preceding claims.
